# EUROPÄISCHE PATENTSCHRIFT

(11) **EP 1 183 964 B1**
(45) Veröffentlichungstag und Bekanntmachung des Hinweises auf die Patenterteilung: **05.11.2003**
(21) Anmeldenummer: 01120981.4
(22) Anmeldetag: 31.08.2001
(51) Int. Cl.: A47B 97/00, A47B 13/12, F21V 8/00

(54) **Möbelstück**
Item of furniture
Meuble

(30) Priorität: 01.09.2000 DE 10043516
(43) Veröffentlichungstag der Anmeldung: 06.03.2002
(73) Patentinhaber: Emde, Thomas, 60389 Frankfurt/Main (DE); Pohl, Heinrich Robert, 50769 Köln (DE)
(72) Erfinder: Emde, Thomas, 60389 Frankfurt/Main (DE); Pohl, Heinrich Robert, 50769 Köln (DE)
(74) Vertreter: Fritz, Edmund Lothar, Dipl.-Chem.

(56) Entgegenhaltungen:
- EP-A- 0 751 340
- DE-U- 8 526 033
- DE-U- 29 800 760
- DE-U- 29 805 006
- US-A- 5 918 932

## Beschreibung

Die vorliegende Erfindung betrifft ein Möbelstück gemäß dem Oberbegriff des Anspruchs 1, vgl. DE-U-29 805 006.

Ein weiteres, bekanntes Möbelstück ist in der DE PS 459 820 beschrieben. Bei diesem Möbelstück handelt es sich um einen Lesetisch mit einer unterhalb einer zu öffnenden Platte angeordneten Glasplatte, in die über ein neben der Glasplatte angeordnetes Leuchtmittel stirnseitig Licht eingeleitet wird. Wenn die über der Glasplatte befindliche Klappe geöffnet ist, wird über die Fläche der Glasplatte Licht abgegeben, so dass eine Beleuchtung z. B. für das Lesen eines Textes erzeugt wird. Die Verwendung von gewöhnlichem Glas als Lichtleiter hat den Nachteil, dass aufgrund der Einfärbung im Glas vorhandene Partikel dabei zu zu hohen Lichtverlusten führen. Will man daher eine hohe Lichtausbeute erhalten, muss man bei der Verwendung von Glasplatten als Lichtleiter spezielles hochwertiges entfärbtes Glas verwenden, welches relativ kostenaufwendig ist. Bei dem zuvor genannten Lesetisch wird die stirnseitig beleuchtete Glasplatte rein zweckgebunden beleuchtet, um ein Lesen zu ermöglichen. Es ist jedoch nicht daran gedacht, ein aus plattenförmigen Elementen bestehendes Möbelstück insgesamt zu beleuchten, um eine Effektbeleuchtung zu erzielen oder einen Beitrag zur allgemeinen Raumbeleuchtung zu erhalten.

Aus dem Stand der Technik ist es weiterhin bekannt, Kunststoffplatten, z. B. aus Acryl oder ähnlichen Kunststoffen als Lichtleiter zu verwenden und stirnseitig das Licht einzuleiten und dann über die Fläche der Kunststoffplatte durch geeignete Bearbeitung der Oberfläche das Licht als Streulicht abzugeben. Dieses Prinzip ist beispielsweise in der US-Zeitschrift "Modern Plastics" Vol. 23, Nr. 12, August 1946, Seite 123 bis 127 von Henry Pearson beschrieben. Die Verwendung von plattenförmigen Elementen, die quasi selbstleuchtend sind, zur Konstruktion von Möbelstücken, wird in diesem Dokument nicht beschrieben. Als Leuchtmittel werden dort insbesondere Glühlampen verwendet, die viel zu große Abmessungen haben und auch einen zu hohen Energieverbrauch, so dass sie für den Einsatz zur Beleuchtung von plattenförmigen Elementen, die Teil eines Möbelstücks sind, nicht in Betracht kommen.

Die Aufgabe der vorliegenden Erfindung besteht darin, ein Möbelstück der eingangs genannten Gattung zu schaffen, welches einen selbstleuchtenden Charakter hat und insgesamt zur Raumbeleuchtung oder Effektbeleuchtung mit vielfältigen lichttechnischen Effekten eingesetzt werden kann, bei geringem Energiebedarf des bzw. der Leuchtmittel.

Die Lösung dieser Aufgabe liefert ein erfindungsgemäßes Möbelstück der eingangs genannten Gattung mit den kennzeichnenden Merkmalen des Hauptanspruchs. Durch die Erfindung ist es möglich, relativ dünne plattenförmige Elemente für den Aufbau des Möbelstücks zu verwenden und in diese mittels Leuchtmitteln mit sehr kleinen Abmessungen stirnseitig Licht einzuleiten, wobei das Leuchtmittel für den Betrachter als diskrete punktförmige Lichtquelle praktisch nicht wahrgenommen wird, sondern die plattenförmigen Elemente, in die das Licht stirnseitig abgestrahlt wird und die das Licht als Streulicht über ihre Fläche abgeben, insgesamt leuchtend wirken. Weiterhin ist es durch die Verwendung der im Anspruch genannten Leuchtmittel möglich, diese elektronisch zu steuern, um durch Änderung der Helligkeit, Beleuchtungsstärke und/oder der farblichen Mischung des oder der Leuchtmittel diverse lichttechnische Effekte zu erzielen. Dies ermöglicht den Einsatz des Möbelstücks als gestalterisches Element in vielfältigen Varianten in einer bislang nicht bekannten Form. Man kann mit relativ einfachen Mitteln die Lichtfarbe dieser Leuchtmittel verändern, z. B. durch elektronische Steuerung. Man kann die Leuchtmittel bei Bedarf ein- oder ausschalten oder dimmen. Beispielsweise können sich die Leuchtmittel allmählich einschalten, wenn das in einen Raum einfallende Tageslicht zurückgeht, oder aber es erfolgt eine Ansteuerung der Leuchtmittel über Sensoren, wie Bewegungsmelder oder dergleichen, wenn eine Person den Raum betritt, in dem sich das Möbelstück befindet, oder sich dem Möbelstück nähert, außerdem ist es möglich, einen zeitabhängigen Ein- oder Ausschaltmodus zu verwenden, was man beispielsweise bei Möbelstücken einsetzen kann, die in Präsentationsräumen, in Schaufenstern oder Museen stehen.

Die Anwendung der Erfindung ist nicht auf einzelne freistehende Möbelstücke beschränkt, sondern kommt ebenfalls in Betracht für Einbaumöbel z.B. Kücheneinbauelemente oder Wohnzimmer- oder Flureinbauschränke. Ebenso kommt die Anwendung der Erfindung in Betracht beispielsweise für Lautsprecherboxen, Messestände und dergleichen.

Die Erfindung ist darüber hinaus auch anwendbar bei sonstigen möbelähnlichen Einbauten in Gebäuden, aber beispielsweise auch in Schiffen, Zügen, Flugzeugen usw., das heißt im Innenausbau allgemein.

Die erfindungsgemäße Idee trägt der Tatsache Rechnung, dass in der heutigen Welt der Mensch in vielen Varianten von Bildschirmen, wie Computerbildschirmen, Fernsehbildschirmen etc. umgeben ist und somit überall selbstleuchtende Flächen in seiner Umgebung findet. Die erfindungsgemäße Lösung unterscheidet sich von der herkömmlichen Möbelleuchte, die punktuell Licht abgibt darin, dass erfindungsgemäß das Möbelstück als Gesamtgegenstand Licht abgibt, das heißt sich als selbstleuchtendes Objekt präsentiert, ohne dass der Betrachter eine einzelne Lichtquelle ausmacht.

Besonders interessant ist im Rahmen einer bevorzugten Variante der Erfindung die Schaffung selbstleuchtender farbiger Objekte, wodurch eine Abstimmung auf andere farbige Gestaltungselemente im Raum, z.B. Tapeten, Vorhänge, Teppiche, sonstige nichtleuchtende Möbelstücke möglich ist.

Im Rahmen der vorliegenden Erfindung werden zur Beleuchtung der lichtabstrahlenden Flächen vorzugsweise LED's als Leuchtmittel eingesetzt. Die Erfindung macht sich dabei die Tatsache zunutze, dass LED's einerseits sehr wenig Raum in Anspruch nehmen, sehr wenig Energie verbrauchen, weißes oder farbiges Licht in den verschiedensten Farbtönen abgeben können und außerdem eine sehr hohe Lebensdauer, die bisher nicht erreichbar war, aufweisen. LED's haben als Leuchtmittel den weiteren Vorteil, dass sie sich einzeln digital ansteuern lassen über eine sogenannte DMX-Steuerung. Damit läßt sich sowohl die Intensität jeder einzelnen Lichtquelle verändern als auch gegebenenfalls deren Farbe sowie die farbliche Mischung des abgegebenen Lichts insgesamt. Außerdem kann jedes einzelne Leuchtmittel über diese DMX-Steuerung zeitlich gesteuert werden, beispielsweise entweder nach festen zeitlichen Vorgaben oder in Abhängigkeit von sonstigen vorhandenen Lichtquellen, abhängig vom Tageslichteinfluss usw.
Dies ermöglicht eine programmierte zeitliche und farbige Veränderung des Lichts und somit der Atmosphäre des Wohnraums.

Vorzugsweise sind erfindungsgemäß die plattenförmigen Elemente, die als Flächen des quasi selbstleuchtenden Möbelstücks verwendet werden in ein oder mehrteiligen Profilrahmen gehaltert, wobei vorzugsweise das oder die Leuchtmittel durch diese oder andere Profilrahmen oder eine ähnliche Abdeckung zum Raum hin abgedeckt ist, so dass das vorhandene Leuchtmittel für den Betrachter einerseits als Lichtquelle nicht erkennbar ist und andererseits eine Blendwirkung vermieden wird.

Als plattenförmige Elemente können Kunststoffplatten, beispielsweise Acrylplatten oder ähnliche Materialien verwendet werden, die opak sein können. Die lichtabgebenden Flächen dieser plattenförmigen Elemente können beispielsweise mit einem Punktraster bedruckt sein, um die erwünschte Streuwirkung zu erzielen. In jedem Fall wird das Licht von dem Leuchtmittel von der Stirnseite her bzw. der Kante des plattenförmigen Elements in dieses hinein abgestrahlt und dort im wesentlichen rechtwinklig umgelenkt und als Streulicht überwiegend im rechten Winkel zur Einstrahlrichtung wird das Licht über die Fläche des plattenförmigen Elements abgegeben.

Wenn im Rahmen der vorliegenden Erfindung von plattenförmigen Elementen die Rede ist, welche lichtabgebende Flächen aufweisen, dann bedeutet dies nicht unbedingt, dass es sich um ebene plattenförmige Elemente handelt. Diese können vielmehr auch in sich gekrümmt sein. Die Verwendung solcher gekrümmter lichtabgebender Flächen erhöht die gestalterischen Möglichkeiten bei der Schaffung erfindungsgemäßer Möbelstücke.

Die erfindungsgemäß verwendeten plattenförmigen Elemente können aus Acrylglas oder ähnlichen Kunststoffen mit vergleichbaren Eigenschaften oder gegebenenfalls auch aus Glas bestehen und so bearbeitet, z.B. bedruckt oder geätzt werden, dass bei eingeschaltetem Leuchtmittel die erwünschte lichtstreuende Wirkung erzielt wird und das plattenförmige Element dann leuchtend erscheint und keine Durchsicht erlaubt. Bei nicht eingeschaltetem Leuchtmittel kann dagegen die Fläche aus dem plattenförmigen Element durchsichtig erscheinen, z.B. indem man das genannte Punktraster in nur geringer Dichte aufdruckt, so dass man bei ausgeschaltetem Leuchtmittel ein Möbelstück mit gläsern wirkenden Elementen hat.

Als Lichtquellen kann man anstelle der LED's grundsätzlich auch die LCD-Technik benutzen.

Die plattenförmigen beleuchtbaren Elemente können einlagig vorhanden sein oder es werden gegebenenfalls auch mehrere plattenförmige Elemente verwendet, die zueinander parallel und voneinander beabstandet liegen mit einem Zwischenraum zwischen den plattenförmigen Elementen. Möglich ist es auch, dass die plattenförmigen Elemente mehrlagig direkt aneinander liegen.

Die lichtstreuende Wirkung erzeugt man dadurch, dass man entweder die Oberfläche entsprechend bedruckt, sandstrahlt, ätzt, beschichtet, graviert oder beklebt. Das Licht, welches innerhalb des plattenförmigen Elements durch Totalreflexion geleitet wird, tritt dann durch die in diesem Sinne behandelte Oberfläche als Streulicht über die Fläche des plattenförmigen Elements aus. Eine ähnliche Wirkung kann man aber auch dadurch erreichen, dass man im Inneren des plattenförmigen Elements eine Fehlstruktur erzeugt, z. B. durch eine sogenannte Innengravur mittels eines fokussierten Laserstrahls.

Die Verwendung von Profilrahmen oder ähnlichen Abdeckungen in den Bereichen, in denen die Leuchtmittel angeordnet sind, hat den Vorteil, dass die Leuchtmittel für den Betrachter nicht sichtbar sind und dadurch der Effekt, wonach das Möbel als quasi selbstleuchtend wahrgenommen wird, ohne dass eine diskrete Lichtquelle in Erscheinung tritt, verstärkt wird.

Möbelstücke im Sinne der vorliegenden Erfindung können Möbel für Innenräume sein, aber ebenso gut auch solche für den Außenbereich, wie Gartenmöbel, Terrassenmöbel, Parkmöbel und dergleichen. In beiden Fällen ist es besonders vorteilhaft, wenn gemäß einer bevorzugten Weiterbildung der Erfindung wenigstens ein plattenförmiges Element photovoltaische Eigenschaften aufweist. Dies bedeutet, dass das plattenförmige Element z. B. durch Solarelemente oder eine entsprechende Solarkollektor-Beschichtung in der Lage ist, einfallendes Sonnenlicht aufzunehmen und in Strom umzuwandeln. Dieser Strom kann dann in einem Akkumulator gespeichert werden. Dies hat den Vorteil, dass tagsüber durch das auf die plattenförmigen Elemente fallende Tageslicht quasi die Energie erzeugt wird, die bei Dunkelheit benötigt wird, um das plattenförmige Element zu beleuchten und das Möbelstück selbstleuchtend erscheinen zu lassen. Außerdem ergibt sich daraus ein entscheidender weiterer Vorteil, nämlich die Tatsache, dass dadurch eine Kabelzuführung für die Stromversorgung der Leuchtmittel entfällt. Dies ist ein optischer Vorteil und erleichtert auch erheblich eine Standortveränderung eines solchen Möbelstücks. Diese Weiterentwicklung ist nicht nur bei Möbeln für den Außenbereich anwendbar, sondern auch bei Innenraummöbeln, sofern diese in der Nähe eines Fensters stehen und ein ausreichender Einfall an Tageslicht gegeben ist.

Die Schaffung von Möbelstücken, die als Einbaumöbel oder Einbauelemente für Gebäude oder auch für Boote, Flugzeuge, Züge oder dergleichen vorgesehen sind, hat den Vorteil, dass sich insbesondere bei hochwertigen Gegenständen, wie beispielsweise Luxusjachten, individuelle ästhetische Gestaltungsmöglichkeiten ergeben.

Bei der Anwendung der Erfindung im Bereich von Innenraummöbeln kommt die Verwendung der erfindungsgemäßen plattenförmigen Elemente im Prinzip bei Möbeln jeglicher Art in Betracht. Dies können beispielsweise Tische, Schränke, Betten, Nachttische, Stühle, Sideboards, Pulte, sein aber auch Phonomöbel, Lautsprecherboxen, eine Bank, ein Schrank, eine Kommode, ein Sofa, ein Sessel, ein Hocker, ein Barhocker, ein Regal, ein Stehpult, eine mobile Trennwand, ein Paravent, ein Phonoschrank, ein Videoschrank, ein CD-Ständer, ein Fernsehtisch, eine Fußbank, eine Vase, ein Blumentopf, ein Abfallsammler, eine Garderobe, eine Hutablage, ein Schirmständer, ein Schreibtisch, eine Ablage, ein Waschbeckenschrank bzw. Badunterschrank, ein Spiegelschrank, ein Kosmetikschrank, ein Badregal, eine Duschablage, ein Gartenmöbel, ein Küchenmöbel, ein Kinderzimmermöbel oder eine Fußleiste.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: ein erstes beispielhaftes erfindungsgemäßes Möbelstück in Form eines Tischs;
- Fig. 2: ein zweites beispielhaftes erfindungsgemäßes Möbelstück in Form eines Betts;
- Fig. 3: ein drittes beispielhaftes erfindungsgemäßes Möbelstück in Form eines Schranks.
- Fig. 4: ein weiteres beispielhaftes erfindungsgemäßes Möbelstück in Form einer Phonotruhe;
- Fig. 5: ein weiteres beispielhaftes erfindungsgemäßes Möbelstück in Form eines Schreibtischs.
- Fig. 6: ein weiteres beispielhaftes erfindungsgemäßes Möbelstück in Form eines Stehpults.

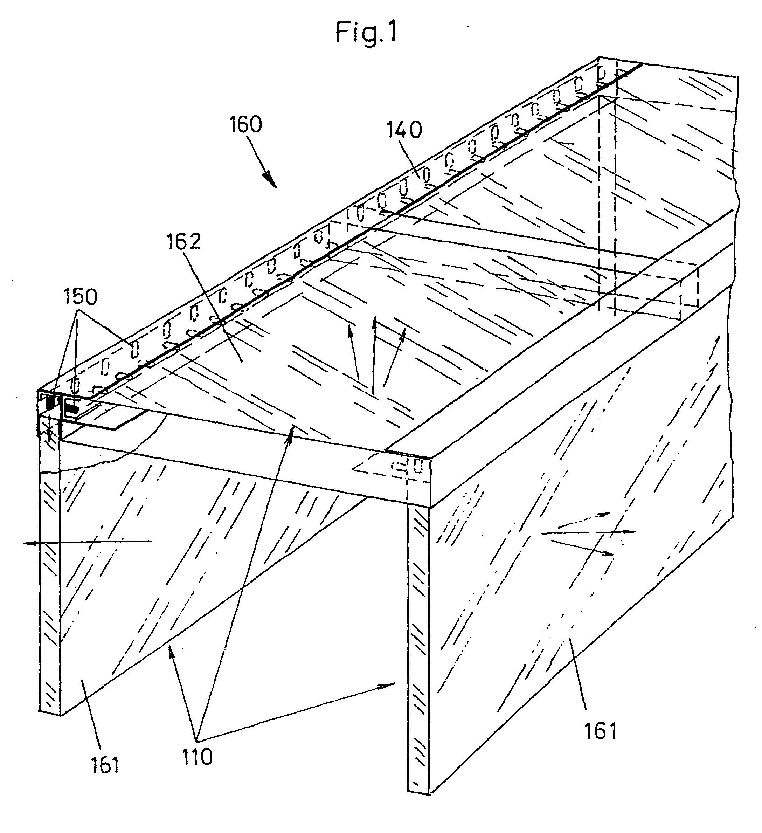

Zunächst wird auf Fig. 1 Bezug genommen und anhand dieser ein erstes Ausführungsbeispiel der Erfindung näher beschrieben. Die Darstellung zeigt perspektivisch in schematisch vereinfachter Weise einen Tisch 160, der mehrere Seitenwangen 161 aufweist sowie eine Tischplatte 162. Seitenwangen 161 und Tischplatte 162 bestehen erfindungsgemäß aus den lichtabstrahlenden plattenförmigen Elementen in Form von Acrylplatten oder dergleichen. In diese Acrylplatten wird stirnseitig über Leuchtmittel 150 wie LED's oder auch Leuchtstoffröhren Licht eingestrahlt, welches dann als Streulicht in Pfeilrichtung senkrecht zur Einstrahlrichtung nach außen abgegeben wird, so dass der Eindruck entsteht, dass bei eingeschaltetem Leuchtmittel 150 der Tisch beleuchtete Seitenwangen 161 bzw. eine beleuchtete oder selbstleuchtende Tischplatte 162 aufweist. Die Leuchtmittel 150 sind durch Profilrahmen 140 abgedeckt, so dass die Leuchtmittel für den Betrachter vom Raum her nicht sichtbar sind. Gleichzeitig dienen diese Profilrahmen 140 zur Halterung und Einfassung der plattenförmigen Elemente 110, aus denen der Tisch 160 aufgebaut ist.

Der linke Eckbereich des Tischs 160 in Fig. 1 ist teilweise geschnitten dargestellt und man kann dort das in dem Profilrahmen 140 gehalterte plattenförmige Element 110 besser erkennen sowie das Leuchtmittel 150, das stirnseitig, also kantenseitig in das plattenförmige Element 110 hin abstrahlt, so dass Streulicht senkrecht zur Einstrahlrichtung hin abgestrahlt wird. Die plattenförmigen Elemente, z.B. Acrylplatten 110 sind zur Erzeugung dieser Streulichtwirkung entsprechend ausgebildet, z.B. opak oder sie sind oberflächenseitig mit einem Punktraster bedruckt. Zur Erzeugung von farbigem Licht können entweder farbige Leuchtmittel, z.B. LED's 150 verwendet werden oder die plattenförmigen Elemente 110 können auch eingefärbt werden.

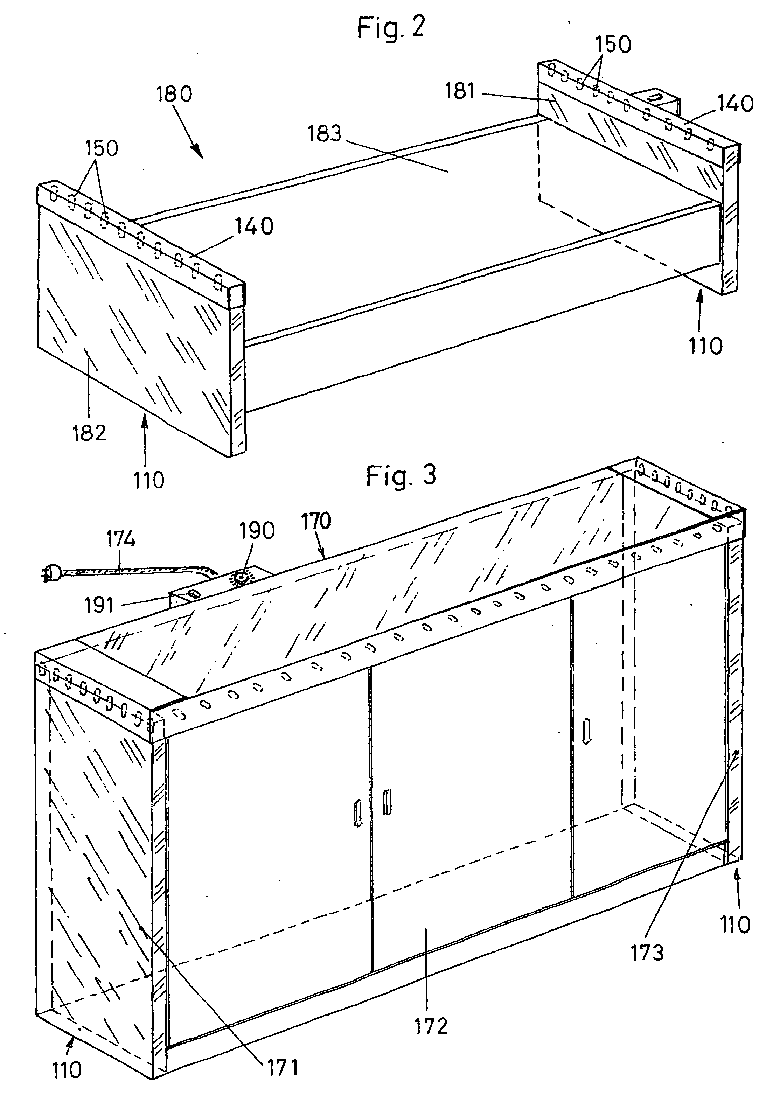

Fig. 2 zeigt ein zweites Ausführungsbeispiel gemäß der Erfindung, in dem ein Bett 180 als erfindungsgemäßes selbstleuchtendes Möbel mit den plattenförmigen Elementen 110 konstruiert wird. Das Bett 180 umfaßt ein Kopfteil 181 und ein Fußteil 182 sowie eine Liegefläche 183. Kopfteil 181 und Fußteil 182 können als plattenförmige Elemente ausgebildet sein oder aus mehreren solchen plattenförmigen Elementen 110 zusammengesetzt sein, die dann in Reihen angeordnet werden können. Diese plattenförmigen Elemente 110 werden rasterförmig zusammengesetzt und haben vorzugsweise einen rechteckigen Grundriß und bilden Querreihen und Längsreihen, je nach Größe der leuchtenden Fläche, die sie bilden. Auch hier sind die plattenförmigen Elemente 110 in Profilrahmen 140 gehaltert und werden über Leuchtmittel 150 in Form von LED's oder schmalen Leuchtstoffröhren beleuchtet, die stirnseitig in die plattenförmigen Elemente 110 hinein abstrahlen. Das Licht tritt über die Fläche des plattenförmigen Elements 110, aus dem das Kopfteil 181 und das Fußteil 182 des Betts aufgebaut ist, nach außen in den Raum aus und erzeugt die ästhetisch anspruchsvolle Wirkung, wonach das erfindungsgemäße Bett bei eingeschalteten Leuchtmitteln selbstleuchtend erscheint, wohingegen ein solches Bett bei nicht eingeschaltetem Leuchtmittel weitgehend transparent wirkt.

Fig. 3 zeigt in schematisch vereinfachter Darstellung ein weiteres Ausführungsbeispiel der Erfindung. Demnach wird ein Schrank 170 aus den erfindungsgemäßen plattenförmigen Elementen 110 aufgebaut. Der Schrank 170 umfaßt derart aufgebaute Schrankwände 171, 173, die aus einem oder mehrerer solcher plattenförmiger Elemente 110 bestehen können. Der Schrank 170 weist weiterhin eine Schranktür 172 auf, die man ebenfalls selbstleuchtend aus den genannten plattenförmigen Elementen 110 ausbilden kann. Für die Stromversorgung der Leuchtmittel 150 ist ein Kabel 174 vorhanden, welches ebenfalls eine Verbindung herstellt zu einer Steuerung 190. Mittels dieser vorzugsweise digitalen Steuerung können die Leuchtmittel einzeln angesteuert und in ihrer Helligkeit verändert werden. Es handelt sich vorzugsweise um eine sogenannte DMX-Steuerung. Außerdem ist es möglich, gegebenenfalls die Lichtfarbe eines oder mehrerer der Leuchtmittel zu verändern. Weiterhin ist bei dem Ausführungsbeispiel ein Schalter 191 vorgesehen. Es ist aber auch möglich, die Leuchtmittel über die Steuerung 190 in einem vorgegebenen Schaltrhythmus ein- bzw. auszuschalten.

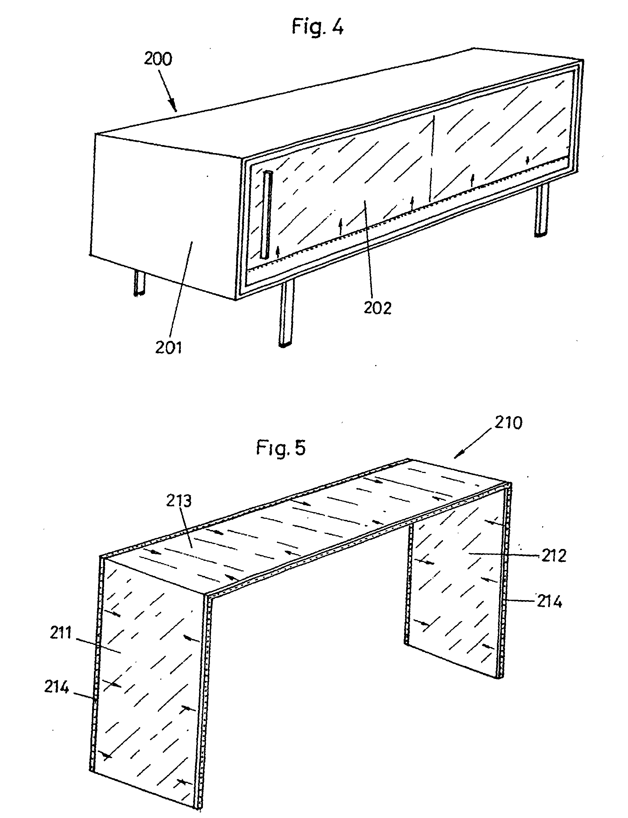

Nachfolgend wird auf Figur 4 Bezug genommen. Die Darstellung zeigt in schematisch vereinfachter Ansicht ein weiteres Ausführungsbeispiel der Erfindung. In diesem Fall handelt es sich um ein truhenartiges Möbelstück, insbesondere eine Phonotruhe 200. Der im Prinzip hohle, quaderförmige Korpus 201 besteht aus Holz oder Kunststoff oder anderen herkömmlichen im Möbelbau verwendeten Materialien. Die als Schiebetüren in Längsrichtung verschiebbaren vorderen Türen 202 bestehen aus plattenförmigen Elementen gemäß der Erfindung, die über stirnseitig in diese plattenförmigen Elemente einstrahlende Leuchtmittel (nicht im Detail dargestellt) beleuchtbar sind. Dadurch wird das Phonomöbel 200 im Türenbereich beleuchtet, was diesem Möbelstück eine besondere Akzentuierung des Türenbereichs verleiht.

Figur 5 zeigt ein Möbelstück gemäß einer weiteren Ausführungsvariante der Erfindung. In diesem Fall handelt es sich um einen Schreibtisch 210, der im Prinzip aus drei plattenförmigen Elementen aufgebaut ist, die jeweils durch in die plattenförmigen Elemente stirnseitig einstrahlende Leuchtmittel nach dem erfindungsgemäßen Prinzip beleuchtbar sind. Zwei dieser plattenförmigen Elemente 211, 212 dienen als Wangen, auf denen der Schreibtisch 210 steht. Oben verläuft in Querrichtung, die beiden Wangen 211, 212 miteinander verbindend, die Schreibtischplatte 213, die ebenfalls aus einem beleuchtbaren plattenförmigen Element besteht. Man erkennt sowohl bei den beiden Wangen 211, 212 als auch bei der Schreibtischplatte 213 die jeweils vorhandenen Profilrahmen 214, die die Leuchtmittel für den Betrachter abgeben. Durch entsprechende Steuerungselemente können die Leuchtmittel (in Figur 5 nicht sichtbar) so gesteuert werden, dass die die Wangen 211, 212, bzw. die Schreibtischplatte 213 bildenden plattenförmigen Elemente farbig beleuchtet erscheinen können, wobei die Lichtfarbe veränderbar sein kann und sich weitere gestalterische Möglichkeiten dadurch ergeben, dass man die einzelnen plattenförmigen Elemente in unterschiedlichen Farben beleuchtet.

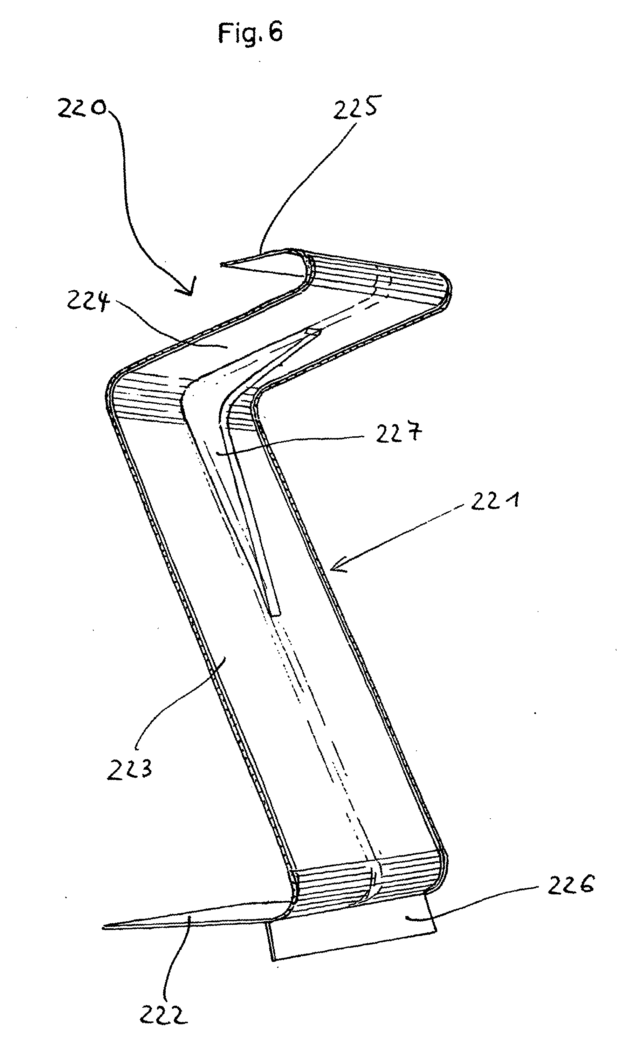

Figur 6 zeigt ein Möbelstück gemäß einer weiteren Variante der Erfindung. In diesem Fall handelt es sich um ein Stehpult 220, welches ebenfalls aus den plattenförmigen Elementen gemäß der Erfindung aufgebaut ist. Die Darstellung zeigt, dass man gegebenenfalls ein einziges plattenförmiges Element 221 verwenden kann, welches aus einem lichtdurchlässigen entsprechend verformbaren Kunststoff besteht und sich so verformen lässt, d. h., in Radien biegen lässt, dass sich ein Stehpult 220 in der dargestellten Gestaltungsform ergibt. Wie man sieht hat das Stehpult ein Fußteil 222, ein mit diesem verbundenes in einem steilen Winkel nach oben ragendes Mittelteil 223 sowie ein damit verbundenes Oberteil 224, welches in einer etwa haarnadelförmigen Umbiegung in ein Auflageteil 225 übergeht. Um die Standfestigkeit zu gewährleisten ist am Fußteil 222 ein Stützsteg 226 vorhanden und zur Aussteifung befindet sich unter dem Oberteil 224 und im Bereich des Mittelteils 223 ein Aussteifungssteg 227.

## Patentansprüche

1. Möbelstück umfassend wenigstens eine lichtabstrahlende Fläche aus wenigstens einem plattenförmigen Element, wobei dem plattenförmigen Element wenigstens ein Leuchtmittel zugeordnet ist, welches von der Stirnseite her Licht in das plattenförmige Element hinein abstrahlt, wobei als Leuchtmittel (150) wenigstens ein LED, SMD-LED, LCD oder dergleichen, vorzugsweise eine Anzahl solcher Leuchtmittel vorgesehen ist, **dadurch gekennzeichnet, dass** Einrichtungen (190) vorgesehen sind, um die Helligkeit, beziehungsweise Beleuchtungsstärke und/oder die farbliche Mischung des oder der Leuchtmittel (150) zu verändern, dass das Licht als Streulicht über die Fläche des plattenförmigen Elements etwa im rechten Winkel zur Einstrahlrichtung abgegeben wird,
und dass das plattenförmige Element beziehungsweise plattenförmige Elemente, die insgesamt leuchtend wirken, als Flächen für den Aufbau des quasi selbstleuchtenden Möbelstücks verwendet werden.

2. Möbelstück nach Anspruch 1, **dadurch gekennzeichnet, dass** wenigstens eines der plattenförmigen Elemente zur Erzeugung einer lichtstreuenden Wirkung wenigstens einseitig bedruckt, gesandstrahlt, geätzt, beschichtet, graviert oder beklebt ist oder das plattenförmige Element im Inneren wenigstens bereichsweise eine lichtstreuende Fehlstruktur aufweist.

3. Möbelstück nach Anspruch 1 oder 2, **dadurch gekennzeichnet, dass** dieses mindestens bereichsweise mehrere parallele aneinandergrenzende oder voneinander beabstandete plattenförmige Elemente mit lichtleitender und lichtstreuender Wirkung aufweist.

4. Möbelstück nach einem der Ansprüche 1 bis 3, **dadurch gekennzeichnet, dass** wenigstens ein plattenförmiges Element wenigstens bereichsweise zur Erzeugung der lichtstreuenden Wirkung in einem Punktraster, Strichraster oder einem ähnlichen Raster bedruckt, gesandstrahlt, geätzt, beschichtet, graviert oder beklebt ist oder eine mittels Laserstrahl erzeugte Fehlstruktur in seinem Inneren (Laserinnengravur) aufweist.

5. Möbelstück nach einem der Ansprüche 1 bis 4, **dadurch gekennzeichnet, dass** eine Anzahl Leuchtmittel (150) auf einer streifenförmigen Anordnung vorgesehen ist, wobei diese Anordnung stirnseitig über eine Rahmenkonstruktion (140) an wenigstens einem plattenförmigen Element (110) befestigt ist.

6. Möbelstück nach einem der Ansprüche 1 bis 5, **dadurch gekennzeichnet, dass** die plattenförmigen Elemente in einoder mehrteiligen Profilrahmen (140) gehaltert sind.

7. Möbelstück nach einem der Ansprüche 1 bis 6, **dadurch gekennzeichnet, dass** das oder die Leuchtmittel (150) durch Profilrahmen (140) oder eine ähnliche Abdeckung zum Raum hin abgedeckt sind.

8. Möbelstück nach einem der Ansprüche 1 bis 7, **dadurch gekennzeichnet, dass** wenigstens ein plattenförmiges Element photovoltaische Eigenschaften aufweist, mittels dessen der zum Betrieb der Leuchtmittel (150) notwendige Strom vorzugsweise über einfallendes Tageslicht erzeugt wird.

9. Möbelstück nach einem der Ansprüche 1 bis 8, **dadurch gekennzeichnet, dass** Steuereinrichtungen und/oder Sensoren vorgesehen sind, die eine Steuerung der Leuchtmittel (150) in Abhängigkeit vom einfallenden Tageslicht, abhängig von einer im Raum anwesenden Person und/oder nach einem beliebigen Programm bewirken.

10. Möbelstück nach einem der Ansprüche 1 bis 9, **dadurch gekennzeichnet, dass** dieses ein Möbelstück für den Außenbereich, insbesondere ein Gartenmöbel ist.

11. Möbelstück nach einem der Ansprüche 1 bis 9, **dadurch gekennzeichnet, dass** dieses ein Einbaumöbel oder Einbauelement bestimmt für den Einbau in einem Gebäude, Boot, Flugzeug, Zug oder dergleichen ist.

12. Möbelstück nach einem der Ansprüche 1 bis 9, **dadurch gekennzeichnet, dass** dieses ein Tisch, Schrank, Bett, Nachttisch, Stuhl, Sideboard, Pult, eine Lautsprecherbox, eine Bank, ein Schrank, eine Kommode, ein Sofa, ein Sessel, ein Hocker, ein Barhocker, ein Regal, ein Stehpult, eine mobile Trennwand, ein Paravent, ein Phonoschrank, ein Videoschrank, ein CD-Ständer, ein Fernsehtisch, eine Fußbank, eine Vase, ein Blumentopf, ein Abfallsammler, eine Garderobe, eine Hutablage, ein Schirmständer, ein Schreibtisch, eine Ablage, ein Waschbeckenschrank bzw. Badunterschrank, ein Spiegelschrank, ein Kosmetikschrank, ein Badregal, eine Duschablage, ein Gartenmöbel, ein Küchenmöbel, ein Kinderzimmermöbel oder eine Fußleiste ist.

## Claims

1. Item of furniture comprising at least one light-emitting area made up of at least one panel-shaped element, the panel-shaped element being assigned at least one illuminating means, which emits light into the panel-shaped element from the end face, at least one LED, SMD-LED, LCD or the like being provided as the illuminating means (150), preferably a number of such illuminating means, **characterized in that** devices (190) for changing the brightness, or illumination intensity and/or the colour mix of the illuminating means (150) are provided, **in that** the light is given off as diffused light over the surface area of the panel-shaped element approximately at right angles to the direction of irradiation, and **in that** the panel-shaped element or panel-shaped elements, which have an illuminating effect overall, are used as surface areas for the construction of the virtually self-illuminating item of furniture.

2. Item of furniture according to Claim 1, **characterized in that**, to produce a light-diffusing effect, at least one of the panel-shaped elements is printed, sand-blasted, etched, coated, engraved or adhesively coated on at least one side, or the panel-shaped element has a light-diffusing deformed structure at least in certain regions of its interior.

3. Item of furniture according to Claim 1 or 2, **characterized in that** it has at least in certain regions a number of parallel panel-shaped elements with a light-conducting and light-diffusing effect, adjacent to one another or spaced apart from one another.

4. Item of furniture according to one of Claims 1 to 3, **characterized in that**, to produce the light-diffusing effect, at least one panel-shaped element is printed, sand-blasted, etched, coated, engraved or adhesively coated at least in certain regions in a grid of points, grid of lines or a similar grid, or has in its interior a deformed structure produced by means of a laser beam (internal laser engraving).

5. Item of furniture according to one of Claims 1 to 4, **characterized in that** a number of illuminating means (150) are provided on a strip-shaped arrangement, this arrangement being fastened to the end face of at least one panel-shaped element (110) by means of a frame construction (140).

6. Item of furniture according to one of Claims 1 to 5, **characterized in that** the panel-shaped elements are secured in a one-part or multi-part profile frame (140).

7. Item of furniture according to one of Claims 1 to 6, **characterized in that** the illuminating means (150) is or are covered towards the room by profile frames (140) or a similar covering.

8. Item of furniture according to one of Claims 1 to 7, **characterized in that** at least one panel-shaped element has photovoltaic properties, by means of which the current necessary for operating the illuminating means (150) is generated preferably by means of incident daylight.

9. Item of furniture according to one of Claims 1 to 8, **characterized in that** control devices and/or sensors are provided, with the effect of controlling the illuminating means (150) in dependence on the incident daylight, depending on a person present in the room and/or on the basis of any desired program.

10. Item of furniture according to one of Claims 1 to 9, **characterized in that** it is an item of furniture for outdoors, in particular an item of garden furniture.

11. Item of furniture according to one of Claims 1 to 9, **characterized in that** it is a fitted item of furniture or fitted element intended for fitting in a building, boat, aircraft, train or the like.

12. Item of furniture according to one of Claims 1 to 9, **characterized in that** it is a table, cupboard, bed, bedside table, chair, sideboard, desk, a loudspeaker enclosure, a bench, a cabinet, a chest of drawers, a sofa, an armchair, a stool, a bar stool, a shelf, a tall desk, a mobile partition, a windbreak, a sound-system cabinet, a video cabinet, a CD rack, a TV table, a foot stool, a vase, a flower pot, a rubbish bin, a wardrobe, a hat rack, an umbrella stand, a writing desk, a place for keeping things, a wash-basin cabinet or cabinet under a bath, a mirror cabinet, a cosmetics cabinet, a bath shelf, a shower ledge, an item of garden furniture, an item of kitchen furniture, an item of nursery furniture or a skirting board.

## Revendications

1. Elément de mobilier comprenant au moins une surface réfléchissant la lumière, constituée d'au moins un élément en forme de plaque, au moins un moyen d'éclairage étant associé à l'élément en forme de plaque et rayonnant depuis le côté frontal de la lumière dans l'élément en forme de plaque, au moins une LED, une SMD-LED, un LCD ou similaires, et de préférence une pluralité de ces moyens d'éclairage étant prévu comme moyen d'éclairage (150), **caractérisé en ce que** des dispositifs (190) sont prévus pour modifier la clarté, l'intensité d'éclairage et/ou le mélange des couleurs du ou des moyens d'éclairage (150), **en ce que** la lumière est émise sous la forme de lumière diffusée sur la surface de l'élément en forme de plaque, sensiblement à angle droit par rapport à la direction du rayonnement incident et **en ce que** le ou les éléments en forme de plaque qui exercent tous un effet d'éclairage sont utilisés comme surfaces pour le montage de l'élément de mobilier quasi auto-éclairant.

2. Elément de mobilier selon la revendication 1, **caractérisé en ce qu'**au moins l'un des éléments en forme de plaque est imprimé, sablé, gravé chimiquement, recouvert, gravé mécaniquement ou collé au moins d'un côté pour créer un effet de diffusion de la lumière, ou l'élément en forme de plaque présente au moins dans certaines parties intérieures une structure de défauts qui diffuse la lumière.

3. Elément de mobilier selon la revendication 1 ou 2, **caractérisé en ce qu'**il présente au moins dans certaines parties plusieurs éléments en forme de plaque, parallèles, adjacents ou écartés les uns des autres, qui exercent un effet de conduction et de diffusion de la lumière.

4. Elément de mobilier selon l'une des revendications 1 à 3, **caractérisé en ce qu'**au moins un élément en forme de plaque est imprimé, sablé, gravé chimiquement, recouvert, gravé mécaniquement ou collé suivant un motif de points, un motif de lignes ou un motif similaire au moins dans certaines parties pour créer l'effet de diffusion de la lumière, ou présente à l'intérieur une structure de défauts créée au moyen d'un faisceau laser (gravure interne au laser).

5. Elément de mobilier selon l'une des revendications 1 à 4, **caractérisé en ce qu'**une pluralité de moyens d'éclairage (150) est prévue dans un agencement en forme de bande, cet agencement étant fixé du côté frontal sur au moins un élément en forme de plaque (110) par une structure de cadre (140).

6. Elément de mobilier selon l'une des revendications 1 à 5, **caractérisé en ce que** les éléments en forme de plaque sont maintenus dans des cadres profilés (140) en une ou plusieurs pièces.

7. Elément de mobilier selon l'une des revendications 1 à 6, **caractérisé en ce que** le ou les moyens d'éclairage (150) sont recouverts en direction du local par des cadres profilés (140) ou par un recouvrement similaire.

8. Elément de mobilier selon l'une des revendications 1 à 7, **caractérisé en ce qu'**au moins un élément en forme de plaque présente des propriétés photovoltaïques au moyen desquelles le courant nécessaire pour l'alimentation des moyens d'éclairage (150) est créé, de préférence par la lumière du jour incidente.

9. Elément de mobilier selon l'une des revendications 1 à 8, **caractérisé en ce que** des dispositifs de commande et/ou des capteurs sont prévus pour exercer une commande des moyens d'éclairage (150) en fonction de la lumière du jour incidente, en fonction de la présence d'une personne dans le local et/ou suivant un programme quelconque.

10. Elément de mobilier selon l'une des revendications 1 à 9, **caractérisé en ce qu'**il s'agit d'un élément de mobilier pour l'extérieur, en particulier un meuble de jardin.

11. Elément de mobilier selon l'une des revendications 1 à 9, **caractérisé en ce qu'**il s'agit d'un meuble encastré ou d'un élément encastré qui peut être monté dans un bâtiment, un bateau, un avion, un train ou similaires.

12. Elément de mobilier selon l'une des revendications 1 à 9, **caractérisé en ce qu'**il s'agit d'une table, d'une armoire, d'un lit, d'une table de nuit, d'une chaise, d'une banquette, d'un pupitre, d'une boîte de haut-parleur, d'un banc, d'une armoire, d'une commode, d'un sofa, d'un fauteuil, d'un tabouret, d'un tabouret de bar, d'une étagère, d'un pupitre droit, d'une cloison mobile, d'un paravent, d'une armoire sono, d'une armoire vidéo, d'un porte-CD, d'une table de téléviseur, d'une estrade, d'un vase, d'un pot de fleurs, d'une corbeille, d'une garde-robe, d'une étagère à chapeaux, d'un porte-parapluies, d'un bureau, d'une tablette, d'une armoire à lavabo, d'une armoire sous baignoire, d'une armoire vitrée, d'une armoire à cosmétiques, d'une tablette pour baignoire, d'une étagère pour douche, d'un meuble de jardin, d'un meuble de cuisine, d'un meuble de chambre d'enfant ou d'une plinthe.
